# EUROPÄISCHE PATENTANMELDUNG

(11) **EP 4 488 231 A1**
(43) Veröffentlichungstag der Anmeldung: **08.01.2025**
(21) Anmeldenummer: 23183190.0
(22) Anmeldetag: 04.07.2023
(51) Int. Cl.: C01D 3/16, C01F 5/22, C01F 11/18, C01F 11/46, C01F 11/28, B01D 53/62, C02F 1/04

(54) **VERFAHREN UND ANLAGE ZUR AUFBEREITUNG VON NATRIUMCHLORID-ROHSOLE**

(71) Anmelder: Schweizer Salinen AG, 4133 Pratteln 1 (CH)
(72) Erfinder: Lauber, Martin, Kreuzlingen (CH)
(74) Vertreter: Hepp Wenger Ryffel AG

(57) **Zusammenfassung**

Die vorliegende Erfindung betrifft ein Verfahren zur Aufbereitung von Natriumchlorid-Rohsole sowie eine Anlage zur Durchführung des Verfahrens. Das Verfahren und die Anlage können zur Gewinnung von Siedesalz eingesetzt werden. Die Aufbereitung der Natriumchlorid-Rohsole erfolgt im erfindungsgemässen Verfahren durch Präzipitation von Magnesiumhydroxid, Calciumcarbonat und einem ersten Anteil Calciumsulfat durch Zugabe von Calciumoxid und/oder Calciumhydroxid in einer ersten Stufe, sowie Präzipitation von Calciumcarbonat durch Zugabe von Natriumcarbonat und Rauchgas umfassend Kohlendioxid in einer zweiten Stufe. Das Verfahren ist dadurch gekennzeichnet, dass das präzipitierte Calciumcarbonat der zweiten Stufe durch Zugabe von Chlorwasserstoffsäure in einer Nebenstufe zu Calciumchlorid und Kohlendioxid umgesetzt wird; dass das umgesetzte Calciumchlorid zur Präzipitation von einem zweiten Anteil Calciumsulfat in der ersten Stufe verwendet wird; dass das umgesetzte Kohlendioxid zur Ausfällung von Calciumcarbonat in der zweiten Stufe verwendet wird; und dass der Überstand der zweiten Stufe als aufbereitete Natriumchlorid-Reinsole erhalten wird.

## Beschreibung

Die vorliegende Erfindung betrifft ein Verfahren zur Aufbereitung von Natriumchlorid-Rohsole sowie eine Anlage zur Durchführung des Verfahrens. Das Verfahren und die Anlage können zur Gewinnung von Siedesalz eingesetzt werden.

Natriumchlorid-Rohsole (oder Kochsalz-Rohsole, Salz-Rohsole) kann unter anderem durch Pumpen von Wasser in unterirdische Salzstöcke oder Salzlagerstätten gewonnen werden, wobei das Salz aufgelöst wird, um die gesättigte Natriumchlorid-Rohsole zu gewinnen. Dieser Prozess wird als Salzlaugung (engl. «solution mining», «salt leaching» oder «brine extraction») bezeichnet. Je nach Zusammensetzung des Salzstocks oder Salzlagers ist eine Vielzahl von chemischen Aufbereitungsverfahren notwendig, um unerwünschte Nebenbestandteile wie Sulfat-, Calcium- und Magnesium-Ionen zu entfernen, bevor die aufbereitete Natriumchlorid-Reinsole in einer Verdampfungskristallisation zu festem Siedesalz weiterverarbeitet werden kann.

Das Kalksodaverfahren (auch Schweizerhalle-Verfahren genannt) ist ein Verfahren zur Aufbereitung von Natriumchlorid-Rohsole des Stands der Technik (DE 140605 C, VON GLENCK KORNMANN & CIE FA, 03. April 1903). Dabei wird in einer ersten Stufe Calciumhydroxid (auch als Löschkalk bekannt) oder Calciumoxid (auch als Branntkalk bekannt) zur Natriumchlorid-Rohsole zugegeben. Wird Calciumoxid zugegeben, reagiert es mit Wasser zu Calciumhydroxid. Durch das Calciumhydroxid werden Magnesium-Ionen nahezu vollständig als Magnesiumhydroxid ausgefällt. Sulfat-Ionen in der Lösung werden gleichzeitig zu einem gewissen Anteil als schwer lösliches Calciumsulfat ausgefällt, was zu einer Reduzierung des Calciumgehalts der Lösung führt. Zudem fällt ein weiterer Anteil der Calcium-Ionen als Calciumcarbonat aus. Somit verbleiben nach der ersten Stufe noch ein Anteil Calcium- und ein Anteil Sulfat-Ionen als unerwünschte Nebenbestandteile übrig. In einer zweiten Stufe des Kalksodaverfahren wird Natriumcarbonat (auch als Soda bekannt) verwendet, um die verbliebenen Calcium-Ionen nahezu vollständig als Calciumcarbonat auszufällen.

Im Vergleich zum klassischen Kalksodaverfahren wird in jüngeren Verfahren in der zweiten Stufe nebst Natriumcarbonat auch Kohlendioxid zur Ausfällung von Calciumcarbonat verwendet. Das Kohlendioxid wird in der Regel als Rauchgas in den Reaktor eingeführt. Das vollständige Ersetzen von Natriumcarbonat mit ökonomisch vorteilhafterem Rauchgas ist nicht möglich, da durch Zugabe von Kohlendioxid der pH-Wert der Sole zu stark absinken würde, wobei gefälltes Calciumcarbonat in Form von Calciumhydrogencarbonat wieder in Lösung gebracht werden würde. Aus diesem Grund kann in der zweiten Stufe auf das basische Natriumcarbonat nur zum Teil verzichtet werden.

Aus der aufbereiteten Sole kann dann in einer Verdampfungskristallisation Siedesalz gewonnen werden, wobei eine Mutterlauge übrigbleibt, welche reich an gelöstem Natriumchlorid ist. Um das Natriumchlorid in der Mutterlauge nicht zu verlieren, ist es vorteilhaft, wenn zumindest ein Teil oder die Gesamtheit der Mutterlauge in der ersten Stufe wieder eingesetzt werden kann. Durch diese Rückführung der basischen Mutterlauge wird in der zweiten Stufe ausserdem weniger Natriumcarbonat benötigt, was ein weiterer Vorteil ist.

Ein Nachteil der genannten Verfahren ist, dass die Sulfat-Ionen in der ersten Stufe mit Calciumoxid oder Calciumhydroxid nicht vollständig aus der Sole entfernt werden können wegen des hohen Löslichkeitsprodukts von Calciumsulfat in der Rohsole. Würde man die gesamte Mutterlauge immer wieder in die erste Aufbereitungsstufe zurückführen, würden sich Sulfat-Ionen anreichern. Um die Ausfällung von Natriumsulfat in den Kristallisatoren zu vermeiden, muss jeweils ein Teil der Mutterlauge abgestossen werden.

In der Praxis erfolgt der Mutterlaugenabstoss in der Regel in Fliessgewässer, was dort zu einem erheblichen Anstieg an Chlorid-Ionen und anderen unerwünschten Substanzen führt. Nebst diesem ökologischen Nachteil ist der Abstoss von Mutterlauge auch aus ökonomischer Sicht nachteilig, da bei jedem Abstoss Natriumchlorid verloren geht.

Im Stand der Technik werden bei der Aufbereitung von Natriumchlorid-Rohsole verschiedene Verfahren angewendet, um die unerwünschte Anreicherung von Sulfat-Ionen zu minimieren oder ganz zu verhindern:
Membrantrennmethoden wie die Nanofiltration können zur Sulfatentfernung aus der Sole eingesetzt werden. In EP 1826179 A1 (ESCO-EUROPEAN SALT COMPANY GMBH, 29.08.2007) und DE 19932955 A1 (SALINEN AUSTRIA, 25.01.2001) werden Verfahren zur Aufbereitung von Salzsole beschrieben, wobei vor der Verdampfungskristallisation eine Nanofiltration durchgeführt wird, um ein sulfatarmes Permeat zu erhalten. Nebst Selektivitätsproblemen dieser Membranen erfordern solche Verfahren regelmässige Reinigungs- und Wartungsarbeiten und die Membranen müssen nach einer bestimmten Betriebsdauer altersbedingt ausgetauscht werden. Zudem erhöht die Verwendung von Membranprozessen den Energieverbrauch.

Als Alternative zu Membrantrennmethoden zur Entfernung von Sulfat-Ionen aus Natriumchlorid-Sole bieten sich Ionenaustauschverfahren an, welche beispielsweise in US 4556463 A (BAYER AG, 03.12.1985) angewendet werden. Im beschriebenen Verfahren wird ein verdünnter Nebenstrom der Sole durch einen schwach basischen, Ionenaustauscher auf Styrol- oder Acrylatbasis geleitet, um die Sulfat-Ionen aus der Lösung zu entfernen. Ionenaustauschharze müssen jedoch regelmässig regeneriert werden, um ihre Effizienz zu erhalten, was ökologische und ökonomische Aufwendungen erfordert. Zudem können Ionenaustauschharze verstopfen, insbesondere bei Anwendungen mit hohem Durchsatz, wie sie in der industriellen Salzaufbereitung üblich sind.

Ebenso wenig wie die vorangehenden Verfahren eignen sich die Umkehrosmose und die Elektrokoagulation zur Entfernung von Sulfat-Ionen und anderen Verunreinigungen in der industriellen Salzaufbereitung, da sie unter anderem grosse Abfallmengen produzieren und viel Energie benötigen.

Es ist somit Aufgabe der vorliegenden Erfindung, zumindest einige, wenn nicht alle Nachteile der Systeme und Verfahren des Stands der Technik zu überwinden. Insbesondere ist es Aufgabe der Erfindung, die Sulfat-Ionen-Konzentration in der Natriumchlorid-Sole so zu verringern, dass die Mutterlauge nach der Verdampfungskristallisation zu einem grossen Teil oder sogar vollständig in der Sole-Aufbereitung wiederverwendet werden kann. Der damit verringerte oder sogar verhinderte Mutterlaugenabstoss in Fliessgewässer ist, wie oben beschrieben, mit grossen ökologischen und ökonomischen Vorteilen verbunden.

Die Aufgabe wird gelöst durch ein Verfahren zur Aufbereitung von Natriumchlorid-Rohsole. Das Verfahren dient insbesondere zur Gewinnung von Siedesalz. Die Aufbereitung der Natriumchlorid-Rohsole erfolgt durch Präzipitation von Magnesiumhydroxid, Calciumcarbonat und einem ersten Anteil Calciumsulfat durch Zugabe von Calciumoxid und/oder Calciumhydroxid in einer ersten Stufe, sowie Präzipitation von Calciumcarbonat durch Zugabe von Natriumcarbonat und Rauchgas umfassend Kohlendioxid in einer zweiten Stufe.

Das Verfahren ist dadurch gekennzeichnet, dass das präzipitierte Calciumcarbonat der zweiten Stufe durch Zugabe von Chlorwasserstoffsäure in einer Nebenstufe zu Calciumchlorid und Kohlendioxid umgesetzt wird. Das Verfahren ist ausserdem dadurch gekennzeichnet, dass das umgesetzte Calciumchlorid zur Präzipitation von einem zweiten Anteil Calciumsulfat in der ersten Stufe verwendet wird. Das umgesetzte Kohlendioxid wird ausserdem zur Ausfällung von Calciumcarbonat in der zweiten Stufe verwendet. Und der Überstand der zweiten Stufe wird als aufbereitete Natriumchlorid-Reinsole erhalten.

Im Rahmen der vorliegenden Erfindung umfasst die Aufbereitung von Natriumchlorid-Rohsole Schritte, die zur Aufreinigung der Rohsole zur Reinsole führen. Der Aufbereitung können aber auch noch nachfolgende Schritte zugeordnet werden. Zu diesen Schritten gehören die Verdampfungskristallisation und die Rückführung einzelner isolierter Bestandteile, der Mutterlauge oder eines Teils davon in einen vorangehenden Verfahrensschritt.

Im Rahmen der vorliegenden Erfindung ist der Begriff «oder» als eine ausschliessende Disjunktion zu verstehen. «A oder B» sagt aus, dass genau eine der beiden Aussagen wahr ist (wenn die Disjunktion wahr ist).

Unter dem Begriff «Natriumchlorid-Rohsole» wird in der Salzindustrie eine wässrige Lösung verstanden, die Natriumchlorid (NaCl) - auch bekannt als Kochsalz - als Hauptbestandteil enthält. Sie enthält ausserdem in der Regel gelöste Ionen, wie zum Beispiel Magnesium, Calcium, Sulfate und andere, die als Verunreinigungen angesehen werden können. Werden solche Verunreinigungen teilweise oder ganz aus der Sole entfernt wird aus der Rohsole eine «Natriumchlorid-Reinsole», welche in einer Verdampfungskristallisation weiterverarbeitet werden kann.

Siedesalz ist hochreines Natriumchlorid (Reinheitsgrad > 99.9 %), welches durch das Verdampfen von Natriumchlorid-Reinsole, oft unter Hitze, gewonnen wird. Es findet Anwendung in Lebensmitteln und/oder in der Industrie. Die regulatorischen Anforderungen hinsichtlich der Reinheitskriterien von Speisesalz sind im Codex Alimentarius CXS 150-1985 (Version: 2012) der Food and Agriculture Organization of the United Nations (FAO) geregelt. Weitere Anforderungen an Siedesalz für industrielle Anwendungen sind die DIN EN 973:2009-12 (Stand: Dezember 2009; Produkte zur Aufbereitung von Wasser für den menschlichen Gebrauch - Natriumchlorid zum Regenerieren von Ionenaustauschern), die DIN EN 14805:2022-11 (Stand: November 2022; Produkte zur Aufbereitung von Wasser für den menschlichen Gebrauch - Natriumchlorid zur elektrochemischen Erzeugung von Chlor vor Ort mittels membranloser Verfahren) und die DIN EN 16370:2022-12 (Stand: Dezember 2022; Produkte zur Aufbereitung von Wasser für den menschlichen Gebrauch - Natriumchlorid zur elektrochemischen Erzeugung von Chlor vor Ort mittels Membranzellen).

Im Rahmen der vorliegenden Erfindung wird als «Stufe» eine spezifische Phase oder ein Abschnitt eines Gesamtprozesses verstanden. Jede Stufe beinhaltet einen bestimmten Schritt oder eine Reihe von Schritten, die ausgeführt werden, um das gewünschte Endprodukt zu erzeugen. Eine Stufe des erfindungsgemässen Verfahrens wird in mindestens einem dafür vorgesehenen Reaktionsgefäss durchgeführt, wobei die Reaktionsgefässe der einzelnen Stufen so miteinander mit Verrohrungen verbunden sind, dass Produkte und Nebenprodukte aus dem Reaktionsgefäss einer Stufe in das Reaktionsgefäss einer anderen Stufe überführt werden können.

Produkte und Nebenprodukte einer höher nummerierten Stufe können auch in die Reaktionsgefässe von Stufen mit niedrigerer Nummerierung überführt werden. Die Bezeichnungen «erste Stufe» und «zweite Stufe» schliessen nicht aus, dass zwischen diesen Stufen oder parallel dazu weitere Verfahrensschritte durchgeführt werden können. Darüber hinaus implizieren diese Bezeichnungen nicht zwangsläufig, dass nach der letzten numerisch benannten Stufe keine weiteren Prozessschritte folgen.

Die im erfindungsgemässen Verfahren präzipitierten Feststoffe können
- als Anhydrate; und/oder
- als Hydrate, vorzugsweise als Halbhydrate, als Monohydrate, als Dihydrate oder als eine Kombination davon;
   vorliegen.

Die in der vorliegenden Erfindung zugegebenen Stoffe und/oder Mischungen können in einer Portion, in mehreren Portionen über einen bestimmten Zeitraum oder kontinuierlich über einen bestimmten Zeitraum zugegeben werden.

In der ersten Stufe des erfindungsgemässen Verfahrens wird Calciumoxid zur Natriumchlorid-Rohsole gegeben, wobei Hydroxidionen gebildet werden:

CaO₍ₛ₎ + H₂O₍ₗ₎ → Ca²⁺_{(aq)} + 2 OH_{(aq)} (1)

Statt Calciumoxid kann gemäss erfindungsgemässem Verfahren auch direkt Calciumhydroxid in der ersten Stufe zugegeben werden. Durch die hohe Hydroxidionenkonzentration wird das in der Natriumchlorid-Rohsole enthaltene Hydrogencarbonat vollständig deprotoniert und in Carbonat überführt:

HCO₃⁻_{(aq)} + OH⁻_{(aq)} → CO₃²⁻_{(aq)} + H₂O₍ₗ₎ (2)

Aufgrund des hohen pH-Wertes, werden Magnesium-Ionen vollständig als Magnesiumhydroxid präzipitiert:

Mg²⁺_{(aq)} + 2 OH⁻_{(aq)} → Mg (OH) ₂₍ₛ₎ ↓ (3)

Durch den hohen Calciumüberschuss fällt das in der Sole enthaltene Hydrogencarbonat als Calciumcarbonat aus:

CO₃²⁻_{(aq)} + Ca²⁺_{(aq)} → CaCO₃₍ₛ₎ ↓ (4)

Die in der Natriumchlorid-Rohsole enthaltenen Sulfat-Ionen werden partiell als Calciumsulfat Dihydrat präzipitiert:

Ca²⁺_{(aq)} + SO₄²⁻_{(aq)} + 2 H₂O₍ₗ₎ → CaSO₄·2 H₂O₍ₛ₎ ↓ (5)

Die vollständige Präzipitation von Calciumsulfat Dihydrat in der Sole kann jedoch ausschliesslich unter Verwendung von Calciumoxid und/oder Calciumhydroxid nicht erreicht werden. Aufgrund des Löslichkeitsproduktes für Calciumsulfat Dihydrat in Natriumchlorid-Rohsole (was annähernd einer gesättigten wässrigen Natriumchlorid-Lösung entspricht) ergibt sich eine maximal mögliche Reduktion auf eine Massenkonzentration von ungefähr 3.1 g/l.

Wenn in der ersten Stufe keine zusätzlichen Stoffe hinzugefügt würden, wäre die Entfernung der Sulfat-Ionen aus der Natriumchlorid-Rohsole also nur teilweise möglich. Um die Sulfat-Ionen-Konzentration weiter zu verringern, wird darum das aus der erfindungsgemässen Nebenstufe gewonnene Calciumchlorid hinzugegeben, um den zweiten Anteil Calciumsulfat zu präzipitieren:

Na₂SO_{4(aq)} + CaCl₂₍ₛ₎ + 2 H₂O₍ₗ₎ → 2 NaCl_{(aq)} + CaSO₄·2 H₂O₍ₛ₎ ↓ (6)

Die während des Verfahrens ausfallenden Feststoffe, werden jeweils vom flüssigen Überstand getrennt.

Der Überstand der erfindungsgemässen ersten Stufe, welcher in das Reaktionsgefäss der zweiten Stufe überführt wird, hat durch Zugabe des Calciumchlorids aus der Nebenstufe eine deutlich tiefere Sulfat-Ionen-Konzentration als ohne diese Zugabe. Der Überstand ist ausserdem im Wesentlichen frei von Magnesium-Ionen, beinhaltet aber weiterhin Calcium-Ionen.

In der zweiten Stufe des erfindungsgemässen Verfahrens werden die restlichen Calcium-Ionen mittels Kohlendioxid sowie Natriumcarbonat als Calciumcarbonat gefällt:

Ca²⁺_{(aq)} + 2 OH⁻_{(aq)} + CO_{2(g)} → CaCO₃₍ₛ₎ ↓ + H₂O₍ₗ₎ (7)

Na₂CO₃₍ₛ₎ → 2 Na_{(aq)}⁺ + CO₃²⁻_{(aq)} (8)

Ca²⁺_{(aq)} + CO₃²⁻_{(aq)} → CaCO₃₍ₛ₎ ↓ (9)

Das in der zweiten Stufe eingesetzte Kohlendioxid wird zum einen durch Kohlendioxid-haltiges Rauchgas zugegeben; zum anderen wird das Kohlendioxid zugegeben, welches in der erfindungsgemässen Nebenstufe entsteht. Wie bereits weiter oben beschrieben, würde durch Zugabe von kostengünstigerem Kohlendioxid allein der pH-Wert der Sole zu stark sinken. Deshalb wird zusätzlich Natriumcarbonat zur Ausfällung von Calciumcarbonat in der zweiten Stufe verwendet.

Der Überstand der erfindungsgemässen zweiten Stufe, also die aufbereitete Natriumchlorid-Reinsole, ist somit im Wesentlichen frei von Calcium-, Magnesium- und Sulfat-Ionen. In diesem Zusammenhang bedeutet der Ausdruck «im Wesentlichen frei von», dass die Ionenkonzentration so gering ist, dass die Mutterlauge nach der Verdampfungskristallisation, welche auf die zweite Stufe folgt, ohne Mutterlaugenabstoss in der ersten Stufe des erfindungsgemässen Verfahrens wiederverwendet werden kann, ohne dass sich die entsprechenden Ionen signifikant in der Sole anreichern.

Das in der zweiten Stufe ausgefällte Calciumcarbonat wird vom Überstand der zweiten Stufe getrennt und in der Nebenstufe mit Chlorwasserstoffsäure umgesetzt:

CaCO₃₍ₛ₎ + 2 HCl₍ₗ₎ → CaCl_{2(aq)} + H₂O₍ₗ₎ + CO_{2(g)} (10)

Das resultierende Calciumchlorid und Kohlendioxid werden, wie oben beschrieben, in der ersten Stufe zur Ausfällung von Calciumsulfat, respektive in der zweiten Stufe zur Ausfällung von Calciumcarbonat eingesetzt.

Es hat sich gezeigt, dass durch das erfindungsgemässe Verfahren der Mutterlaugenabstoss in Fliessgewässer nach der Verdampfungskristallisation auf ein Minimum reduziert oder sogar vollständig verhindert werden kann. Würden die Sulfat-Ionen nicht im Wesentlichen vollständig aus der Sole entfernt werden, müsste jeweils ein grosser Teil Mutterlauge abgestossen werden, um eine Anreicherung an Sulfat-Ionen zu vermeiden. Dies verhindert die negativen ökologischen Auswirkungen, die durch erhöhte Mengen an Natriumchlorid und anderen unerwünschten Stoffen (z.B. Sulfat-Ionen) in Fliessgewässern entstehen können. Ausserdem bietet das erfindungsgemässe Verfahren den Vorteil, dass das in der Mutterlauge enthaltene Natriumchlorid ökonomisch nutzbar bleibt, da es sich bei der Natriumchlorid-Sole um einen endlichen Rohstoff handelt.

In einem alternativen Verfahren könnte kommerziell erhältliches Calciumchlorid in der ersten Stufe zugegeben werden. Demgegenüber hat das erfindungsgemässe Verfahren jedoch den Vorteil, dass das Nebenprodukt Calciumcarbonat aus Stufe 2 wiederverwendet werden kann, wenn es mit Chlorwasserstoffsäure zu Calciumchlorid umgesetzt wird. Zudem entsteht dabei Kohlendioxid, was den Rauchgasbedarf in Stufe 2 stark reduziert. Ein geringerer Rauchgasbedarf reduziert den Einsatz fossiler Energieträger.

Ein Vorteil der erhöhten Rückführung der Mutterlauge ist, dass in Stufe 1 des erfindungsgemässen Verfahrens eine höhere Natriumsulfatkonzentration vorliegt. Je höher die Natriumsulfatkonzentration, desto höher ist die Löslichkeit von Calciumoxid. Mit dem erfindungsgemässen Verfahren kann daher eine vergleichsweise hohe Hydroxidkonzentration (ca. 30 mmol/l) erreicht werden.

Durch diese erhöhte Alkalinität der Natriumcarbonat-Sole wird im erfindungsgemässen Verfahren der Bedarf an Calciumoxid in der ersten Stufe und Natriumcarbonat in der zweiten Stufe weiter gesenkt.

Ein weiterer positiver Effekt des vorliegenden Verfahrens ist, dass durch die Verwendung von Calciumchlorid in der ersten Stufe weiteres Natriumchlorid gebildet wird, welches auskristallisiert werden kann (Gleichung 6).

In einer bevorzugten Ausführungsform des erfindungsgemässen Verfahrens weist der Überstand der ersten Stufe eine Hydroxidkonzentration von mindestens 20 mmol/l, bevorzugt mindestens 25 mmol/l, am meisten bevorzugt mindestens 30 mmol/l auf.

Die Gehaltsangabe «mmol/l» bezeichnet die Anzahl Hydroxid-Ionen in mmol pro Liter des Überstands der ersten Stufe.

Der Gehalt an Hydroxidionen wird mittels potentiometrischer Titration unter Verwendung von Chlorwasserstoffsäure als Titrator gemessen.

Wie oben beschrieben, bewirkt die erhöhte Mutterlaugenrückführung eine erhöhte Natriumsulfatkonzentration in der Natriumchlorid-Sole, was wiederum die Löslichkeit von Calciumoxid erhöht. Dadurch sinkt der Calciumoxidbedarf in der ersten Stufe. Durch die erhöhte Basizität der Sole sinkt ausserdem der Natriumcarbonat-Bedarf in der zweiten Stufe.

In einer weiteren bevorzugten Ausführungsform wird der Überstand der ersten Stufe im Wesentlichen vollständig in der zweiten Stufe verwendet.

In diesem Zusammenhang bedeutet der Begriff «im Wesentlichen vollständig», dass mindestens 95 %, vorzugsweise mindestens 97 %, am meisten bevorzugt mindestens 99 % des Überstands der ersten Stufe in der zweiten Stufe verwendet wird.

Somit ist es nicht nötig, die aufzubereitenden Natriumchlorid-Sole aufwändig in mehrere Portionen oder Ströme aufzuteilen und die einzelnen Portionen oder Ströme in unterschiedlichen Teilschritten aufzuarbeiten und später wieder zusammenzuführen.

In einer weiteren bevorzugten Ausführungsform des erfindungsgemässen Verfahrens ist der Gehalt an Magnesium-Ionen in der Natriumchlorid-Reinsole weniger als 0.10 mg/kg, vorzugsweise weniger als 0.05 mg/kg. Am meisten bevorzugt ist die Natriumchlorid-Reinsole im Wesentlichen frei von Magnesium-Ionen.

In einer weiteren bevorzugten Ausführungsform des erfindungsgemässen Verfahrens ist der Gehalt an Calcium-Ionen in der Natriumchlorid-Reinsole weniger als 15.0 mg/kg, vorzugsweise weniger als 5.0 mg/kg. Am meisten bevorzugt ist die Natriumchlorid-Reinsole im Wesentlichen frei von Calcium-Ionen.

In einer weiteren bevorzugten Ausführungsform des erfindungsgemässen Verfahrens ist der Gehalt an Sulfat-Ionen in der Natriumchlorid-Reinsole weniger als 10.5 g/kg, vorzugsweise weniger als 8.5 g/kg. Am meisten bevorzugt ist die Natriumchlorid-Reinsole im Wesentlichen frei von Sulfat-Ionen.

Eine Kombination der drei Ausführungsformen zu den Ionen-Gehältern in der Natriumchlorid-Reinsole ist ebenfalls möglich.

Die Gehaltsangaben «mg/kg» und «g/kg» bezeichnen die Masse des entsprechenden Ions pro Kilogramm Sole.

Die Messung der Calcium-, Magnesium- und Sulfat-Ionen-Gehältern erfolgt mittels Optischer Emissionsspektroskopie mit induktiv gekoppeltem Plasma (engl.: «Inductively Coupled Plasma Optical Emission Spectroscopy», ICP-OES) gemäss der Prüfnorm «EUsalt/AS 015-2015» (Stand: 2015).

In diesem Zusammenhang bedeutet der Begriff «im Wesentlichen frei von», dass bei korrekter Anwendung der genannten Prüfnorm keine Ionen des entsprechenden Elements detektiert werden.

Das erfindungsgemässe Verfahren führt zu den beschriebenen vergleichsweise niedrigen Gehältern der Calcium-, Magnesium- und Sulfat-Ionen in der Natriumchlorid-Reinsole. Dies ermöglicht das Rückführen eines grossen Teils oder der gesamten Mutterlauge nach der Verdampfungskristallisation.

In einer weiteren bevorzugten Ausführungsform des erfindungsgemässen Verfahrens werden in einer dritten Stufe aus der Natriumchlorid-Reinsole in einer Verdampfungskristallisation Natriumchlorid als Feststoff und eine Mutterlauge erzeugt.

Bei der Verdampfungskristallisation wird die Natriumchlorid-Reinsole erhitzt, um Wasser zu verdampfen, wobei Natriumchlorid zu einem Feststoff auskristallisiert. Dies kann beispielsweise in einem Verdampfungstank oder in einer Verdampfungspfanne geschehen. Nach der Kristallisation wird das feste Natriumchlorid von der übrigen Lösung, der Mutterlauge, getrennt. Die Mutterlauge ist eine gesättigte Natriumchlorid-Lösung, welche noch weitere Ionen in Lösung enthalten kann.

In einer bevorzugten Ausführungsform des erfindungsgemässen Verfahrens ist der Gehalt an Magnesium-Ionen in der Mutterlauge weniger als 0.10 mg/kg, vorzugsweise weniger als 0.05 mg/kg. Am meisten bevorzugt ist die Mutterlauge im Wesentlichen frei von Magnesium-Ionen.

In einer weiteren bevorzugten Ausführungsform des erfindungsgemässen Verfahrens ist der Gehalt an Calcium-Ionen in der Mutterlauge weniger als 15 mg/kg, vorzugsweise weniger als 5 mg/kg. Am meisten bevorzugt ist die Mutterlauge im Wesentlichen frei von Calcium-Ionen.

In einer anderen bevorzugten Ausführungsform des erfindungsgemässen Verfahrens ist der Gehalt an Sulfat-Ionen in der Mutterlauge weniger als 35.0 g/kg, vorzugsweise weniger als 24.0 g/kg. Am meisten bevorzugt ist die Mutterlauge im Wesentlichen frei von Sulfat-Ionen.

Eine Kombination der drei Ausführungsformen zu den Ionen-Gehältern in der Mutterlauge ist ebenfalls möglich.

Die Definitionen zu den Gehaltsangaben «mg/kg» sowie «g/kg», die Prüfnorm zur Messung der Ionen-Gehälter und die Definition des Begriffs «im Wesentlichen frei von», welche weiter oben genannt wurden, gelten hier gleichermassen.

Das erfindungsgemässe Verfahren führt zu den beschriebenen vergleichsweise niedrigen Gehältern der Calcium-, Magnesium- und Sulfat-Ionen in der Mutterlauge. Dies ermöglicht das Rückführen eines grossen Teils oder der gesamten Mutterlauge.

In einer weiteren bevorzugten Ausführungsform des erfindungsgemässen Verfahrens wird die Mutterlauge der Verdampfungskristallisation mindestens zu 80 %, vorzugsweise mindestens zu 90 %, noch mehr bevorzugt mindestens zu 95 %, am meisten bevorzugt im Wesentlichen vollständig in der ersten Stufe als Mutterlaugenrückführung zugegeben.

Dies führt zu den bereits oben erwähnten Vorteilen. Insbesondere wird damit das Verunreinigen von Fliessgewässern durch Natriumchlorid und Sulfat vermindert. Ausserdem erhöht das Rückführen der Mutterlauge in der erste Stufe des erfindungsgemässen Verfahrens die Natriumsulfatkonzentration, was schliesslich den Bedarf and Calciumoxid und Natriumcarbonat verringert.

In einer bevorzugten Ausführungsform des erfindungsgemässen Verfahrens werden pro Kilogramm in der Nebenstufe zugegebener Chlorwasserstoffsäure höchstens 1.5 kg, bevorzugt höchstens 1.0 kg, am meisten bevorzugt höchstens 0.5 kg Natriumcarbonat in der zweiten Stufe zugegeben.

Wird das Verfahren im Rahmen der vorliegenden Erfindung in einem Chargenbetrieb (Batch-Prozessführung) durchgeführt, beziehen sich diese Massenverhältnisse auf die zugegebenen Mengen pro Charge. In der kontinuierlichen oder semi-kontinuierlichen Prozessführung beziehen sich diese Massenverhältnisse auf die zugegebene Menge pro Zeiteinheit.

In einer weiteren bevorzugten Ausführungsform des erfindungsgemässen Verfahrens wird/werden pro Kilogramm in der Nebenstufe zugegebener Chlorwasserstoffsäure höchstens 1.0 kg, bevorzugt höchstens 0.5 kg, noch mehr bevorzugt höchstens 0.2 kg, am meisten bevorzugt gar kein Kohlendioxid als Bestandteil von Rauchgas in der zweiten Stufe zugegeben.

Dabei ist nur das Kohlendioxid gemeint, welches mittels Rauchgas dem Prozess zugeführt wird; nicht das Kohlendioxid, welches in der Nebenstufe entsteht.

Es hat sich gezeigt, dass mit dem erfindungsgemässen Verfahren der Rauchgasbedarf zu einem grossen Teil verringert werden kann oder dass sogar gar kein Rauchgas mehr zur Kohlendioxid-Zufuhr eingesetzt werden muss.

Die Aufgabe wird ausserdem gelöst von einer Anlage zur Durchführung des erfindungsgemässen Verfahrens. Die Anlage umfasst einen ersten Behälter zur Durchführung der ersten Stufe des Verfahrens. Sie umfasst ausserdem einen zweiten Behälter zur Durchführung der zweiten Stufe des Verfahrens. Zudem umfasst sie einen dritten Behälter zur Durchführung der Nebenstufe des Verfahrens. Zusätzlich umfasst sie eine erste Verrohrung zur Überführung von Calciumchlorid aus dem dritten Behälter in den ersten Behälter; und eine zweite Verrohrung zur Überführung von Kohlendioxid aus dem dritten Behälter in den zweiten Behälter.

Die erste Verrohrung und die zweite Verrohrung sind so hergerichtet, dass jeweils eine kontrollierte Menge Calciumchlorid und Kohlendioxid aus dem Behälter der Nebenstufe mit einer kontrollierten Flussrate in jeweils dafür vorgesehenen Behälter überführt werden können. Die erste Verrohrung ist an der unteren Hälfte, vorzugsweise am unteren Viertel, noch mehr bevorzugt am unteren Scheitelpunkt mit dem dritten Behälter verbunden, damit das feste Calciumchlorid daraus entnommen werden kann. Die zweite Verrohrung ist an der oberen Hälfte, vorzugsweise am oberen Viertel, am meisten bevorzugt am oberen Achtel mit dem dritten Behälter verbunden, damit das gasförmige Kohlendioxid daraus entnommen werden kann.

Die erfindungsgemässe Anlage ermöglicht es, das erfindungsgemässe Verfahren durchzuführen, indem das Calciumchlorid und das Kohlendioxid, welche in der Nebenstufe aus dem Nebenprodukt Calciumcarbonat der zweiten Stufe hergestellt werden, wiederverwendete werden können. Für die Anlage gelten die gleichen oben genannten Vorteile wie für das Verfahren.

In einer bevorzugten Ausführungsform der erfindungsgemässen Anlage können durch die erste Verrohrung mindestens 18 kg, vorzugsweise mindestens 90 kg, noch mehr bevorzugt mindestens 180 kg, am meisten bevorzugt mindestens 230 kg Calciumchlorid pro Stunde überführt werden.

In einer weiteren bevorzugten Ausführungsform der erfindungsgemässen Anlage können durch die zweite Verrohrung mindestens 7 kg, vorzugsweise mindestens 35 kg, noch mehr bevorzugt mindestens 70 kg, am meisten bevorzugt mindestens 90 kg Kohlendioxid pro Stunde überführt werden.

In einer weiteren bevorzugten Ausführungsform verfügt die Anlage über eine Steuervorrichtung, die so konfiguriert ist, dass in der zweiten Stufe bei bestimmungsgemässem Gebrauch nur so viel Rauchgas zugegeben wird, dass die Summe der zugegebenen Mengen an Kohlendioxid aus der Nebenstufe und Kohlendioxid des Rauchgases dem Kohlendioxid-Bedarf der zweiten Stufe entspricht.

Als Kohlendioxid-Bedarf wird in einem Chargenprozess die Menge (Masse oder Anzahl Teilchen), bei kontinuierlicher Prozessführung die Durchflussmenge (Volumen pro Zeit, Masse pro Zeit oder Anzahl Teilchen pro Zeit) an Kohlendioxid bezeichnet, die in der zweiten Stufe zugegeben werden kann, ohne den pH-Wert so stark zu senken, dass die präzipitierten Calcium-Ionen wieder in Lösung gehen. Wie oben beschrieben, wird der pH-Wert der Sole in dieser Stufe zu einem grossen Teil vom zugegebenen Kohlendioxid und vom zugegebenen Natriumcarbonat bestimmt. Für den Kohlendioxid-Bedarf kann auch ein Wert unterhalb dieser Menge oder Durchflussmenge festgelegt werden.

In einer bevorzugten Ausführungsform ist der erste Behälter, der zweite Behälter, der dritte Behälter oder eine Kombination an Behältern der erfindungsgemässen Anlage mit einer Rührvorrichtung ausgestattet.

In einer weiteren bevorzugten Ausführungsform ist/sind die erste Verrohrung und/oder die zweite Verrohrung mit einem Ventil zur Regelung des Massendurchflusses und/oder Volumendurchflusses ausgestattet.

Der Massendurchfluss ist die Masse eines Stoffes, die pro Zeiteinheit durch eine bestimmte Querschnittsfläche fliesst. Er wird typischerweise in Kilogramm pro Stunde (kg/h) oder anderen Massen pro Zeiteinheiten gemessen.

Der Volumendurchfluss ist das Volumen eines Stoffes, das pro Zeiteinheit durch eine bestimmte Querschnittsfläche fliesst. Er wird typischerweise in Kubikmetern pro Stunde (m³/h) oder anderen Volumen pro Zeiteinheiten gemessen.

In einer anderen bevorzugten Ausführungsform ist/sind die erste Verrohrung und/oder die zweite Verrohrung mit einer Pumpe zur Regelung des Massendurchflusses und/oder Volumendurchflusses ausgestattet ist/sind.

Die Erfindung wird nun anhand konkreter Ausführungsbeispiele beschrieben. Diese Ausführungsformen sollen den Kern der Erfindung in keiner Weise einschränken, sondern dienen vielmehr das Verständnis der Erfindung zu erleichtern.
- Fig. 1:: Fliessbild einer erfindungsgemässen Anlage zur Aufbereitung von Natriumchlorid-Rohsole zu Natriumchlorid-Reinsole;
- Fig. 2:: maximal mögliche Hydroxid-Ionen-Konzentration in Natriumchlorid-Sole in Abhängigkeit von der Natriumsulfat-Konzentration;
- Fig. 3:: Flussdiagramm umfassend die Massen- und Volumenströme im Sole-Aufbereitungs-Prozess.

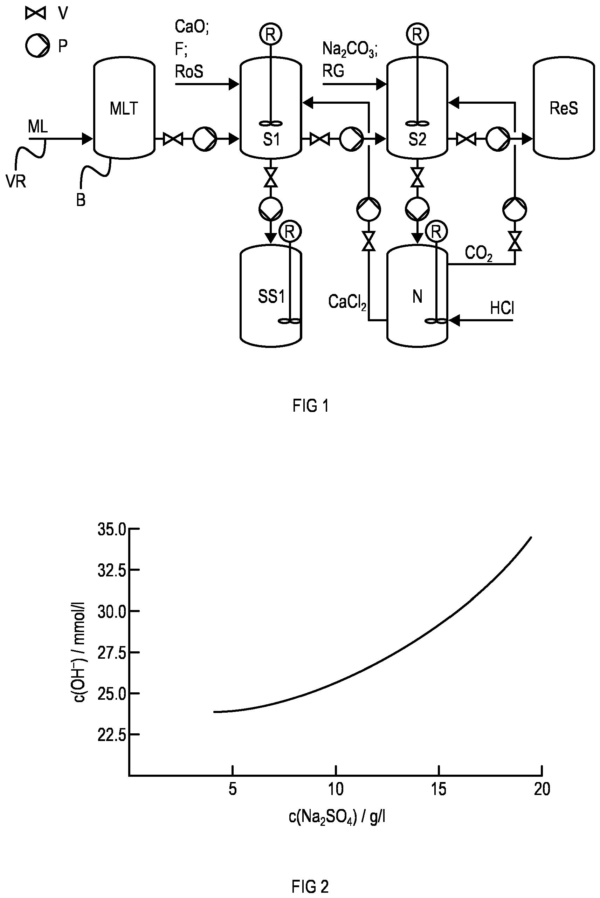

In Fig. 1 ist ein Fliessbild einer Anlage zur Durchführung des erfindungsgemässen Verfahrens in einem Chargenbetrieb dargestellt. Die Anlage umfasst mehrere Behälter (B), welche in diesem Ausführungsbeispiel Reaktoren der chemischen Industrie sind. In gewissen Behältern (B) ist jeweils eine Rührvorrichtung (R) angebracht. Die als Pfeile dargestellten Verrohrungen (VR) zeigen die Fliessrichtung zwischen den einzelnen Behältern (B) an und sind mit Ventilen (V) und Pumpen (P) ausgestattet.

Die Pfeile in Fig. 1, die beim Kreuzen eines anderen Pfeils unterbrochen sind, sind nicht als unterbrochene Verrohrungen (VR) zu verstehen. Diese Darstellungsweise soll lediglich das Verständnis der Figur erleichtern.

Die Mutterlauge (ML) aus der Verdampfungskristallisation (VK) wird in einem Mutterlaugentank (MLT) gelagert und zusammen mit dem Calciumoxid, dem Filtrat (F) und dem Calciumchlorid aus der Nebenstufe (N) in der ersten Stufe (S1) zur Natriumchlorid-Rohsole (RoS) zugegeben. Nach erfolgter Reaktion werden das präzipitierte Magnesiumhydroxid, Calciumcarbonat und Calciumsulfat als Schlamm der ersten Stufe (SS1) vom Überstand abgetrennt. Der Schlamm der ersten Stufe (SS1) wird einer Klärfiltration unterzogen und das dabei entstehende Filtrat (F) wird in der ersten Stufe (S1) einer nächsten Charge zugegeben.

Der Überstand der ersten Stufe (S1) wird in den Behälter (B) für die zweite Stufe (S2) geleitet und sowohl Natriumcarbonat, Rauchgas (RG) umfassend Kohlendioxid, als auch Kohlendioxid aus der Nebenstufe (N) werden zugegeben. Das dabei präzipitierende Calciumcarbonat wird in den Behälter (B) für die Nebenstufe (N) überführt und der Überstand der zweiten Stufe (S2) wird als Natriumchlorid-Reinsole (ReS) für die Verdampfungskristallisation (VK) verwendet.

Zum Calciumcarbonat im Behälter (B) der Nebenstufe (N) wird Chlorwasserstoffsäure gegeben, um Calciumchlorid und Kohlendioxid herzustellen. Das Calciumchlorid wird in den Behälter (B) der ersten Stufe (S1) und das Kohlendioxid in den Behälter (B) der zweiten Stufe (S2) überführt.

Die chemische Zusammensetzung, sowie weitere physikalische Eigenschaften der Natriumchlorid-Rohsole (RoS) sind in Tabelle 1 dargestellt.

**Tabelle 1: Chemische (β: Massenkonzentration (Masse der Spezies pro Volumen der Sole); w: Massenanteil (Masse der Spezies pro Masse der Sole); c: Stoffmengenkonzentration (Stoffmenge der Spezies pro Volumen der Sole)) und physikalische (ρ: Dichte) Parameter der Natriumchlorid-Rohsole (RoS), welche im erfindungsgemässen Verfahren und in den Vergleichsverfahren verwendet wurde.**

| Parameter | Einheit | RoS |
|---|---|---|
| β(SO₄²⁻) | g/l | 3.06 |
| w(SO₄²⁻) | g/kg | 2.54 |
| β(Ca²⁺) | g/l | 1.31 |
| w(Ca²⁺) | g/kg | 1.09 |
| β(Br⁻) | mg/l | 7.7 |
| w(Br⁻) | mg/kg | 6.4 |
| β(K⁺) | mg/l | 21.1 |
| w(K⁺) | mg/kg | 17.5 |
| β(Mg²⁺) | mg/l | 26.8 |
| w(Mg²⁺) | mg/kg | 22.3 |
| β(HCO₃⁻) | mg/l | 95.3 |
| w(HCO₃⁻) | mg/kg | 79.2 |
| c(OB-) | mol/l | 5.8E-08 |
| β(NaCl) | g/l | 305.00 |
| c(NaCl) | mol/l | 5.22 |
| pH-Wert | | 6.7 |
| pOH-Wert | | 7.3 |
| ρ(RoS) | g/ml | 1.203 |

Wird diese Natriumchlorid-Rohsole (RoS) mit dem erfindungsgemässen Verfahren aufbereitet, kann, wie oben beschrieben, im Wesentlichen die gesamte Mutterlauge (ML) nach der Verdampfungskristallisation (VK) wieder in Stufe 1 (S1) überführt werden, ohne dass sich Sulfat-Ionen in der Sole anreichern. Dadurch, dass die gesamte Mutterlauge (ML) rückgeführt werden kann, liegt in der Sole eine höhere Natriumsulfat-Konzentration vor. Fig. 2 zeigt, dass bei einer erhöhten Natriumsulfat-Konzentration von ungefähr 17 g/l die Löslichkeit von Calciumoxid so erhöht wird, dass Hydroxid-Konzentrationen von ungefähr 30 mmol/l ermöglicht werden. Das wurde weiter oben bereits beschrieben.

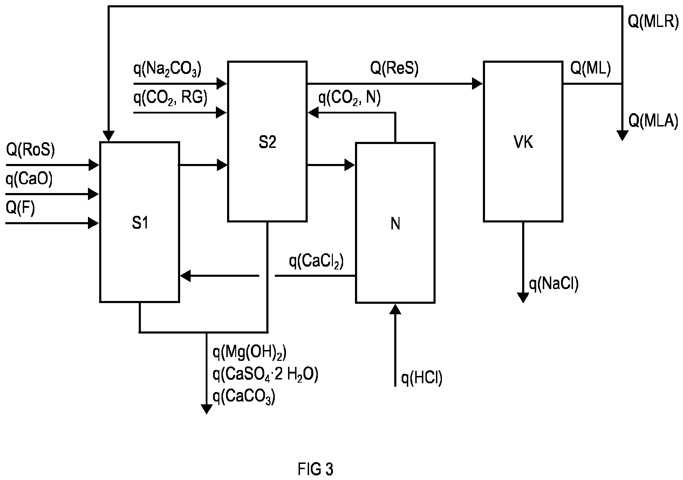

Dies führt unter anderem dazu, dass im Verfahren weniger Calciumoxid und Natriumcarbonat benötigt werden, was in Tabelle 2 anhand der benötigten Volumendurchflüsse (Q) und Massendurchflüsse (q) der einzelnen Spezies gezeigt wird, wenn mehrere Chargen hintereinander produziert werden. Zudem kann im vorliegenden Ausführungsbeispiel der gesamte Kohlendioxidbedarf der zweiten Stufe (S2) durch das in der Nebenstufe (N) entstehende Kohlendioxid gedeckt werden. Somit muss kein Rauchgas verwendet werden. Fig. 3 stellt die Massendurchflüsse (q) und Volumendurchflüsse (Q) der einzelnen Stufen (Stufe 1, S1; Stufe 2, S2; Nebenstufe, N; Verdampfungskristallisation, VK) dar.

In den in Tabelle 2 gezeigten Vergleichsverfahren können Natriumchlorid-Rohsolen (RoS) mit den gleichen chemischen und physikalischen Eigenschaften aufbereitet werden. Ein erstes Vergleichsverfahren (Vergleich 1) entspricht dem oben beschriebenen Kalksodaverfahren, wobei zusätzlich Kohlendioxid in Form von Rauchgas (RG) in der zweiten Stufe (S2) eingesetzt wird. Eine Umsetzung des präzipitierten Calciumcarbonats aus der zweiten Stufe (S2) zu Calciumchlorid und Kohlendioxid und deren Weiterverwendung erfolgt jedoch nicht. Ein Teil der Mutterlauge (ML) wird in einer Mutterlaugenrückführung (MLR) in der ersten Stufe (S1) wieder eingesetzt und der Rest als Mutterlaugenabstoss (MLA) entsorgt. Vergleichsverfahren 2 (Vergleich 2) unterscheidet sich von Vergleich 1 insoweit, dass die Mutterlaugenrückführung (MLR) höher und der Mutterlaugenabstoss (MLA) niedriger ist. Eine höhere Mutterlaugenrückführung (MLR) als in Vergleich 2 würde zu einer zu starken Sulfatanreicherung in der Mutterlauge führen und es bestünde die Gefahr, dass bei der Verdampfungskristallisation Natriumsulfat zusammen mit dem erwünschten Natriumchlorid ausfallen könnte.

**Tabelle 2: Volumendurchflüsse (Q) und Massendurchflüsse (q) der einzelnen Spezies des Aufbereitungsprozesses von Natriumchlorid-Rohsole (RoS) im Erfindungsgemässen Verfahren, sowie in drei Vergleichsverfahren.**

| Spezies Q: m³/h; q: kg/h | Erfindung | Vergleich 1 | Vergleich 2 | Vergleich 3 |
|---|---|---|---|---|
| Q(RoS) | 105.4 | 116.7 | 107.8 | 165.0 |
| q(CaO) | 189.5 | 189.5 | 189.5 | 210.0 |
| Q(F) | 9.6 | 9.6 | 9.6 | 0.0 |
| q(Na₂CO₃) | 90.0 | 179.0 | 105.0 | 383.0 |
| q (CO₂, RG) | 0.0 | 86.0 | 90.0 | 82.0 |
| q(HCl) | 150.9 | 0.0 | 0.0 | 0.0 |
| q(CaCl₂) | 229.7 | 0.0 | 0.0 | 0.0 |
| q(CO₂, N) | 92.0 | 0.0 | 0.0 | 0.0 |
| Q(ReS) | 165.0 | 165.0 | 165.0 | 165.0 |
| Q(ML) | 50.0 | 50.0 | 50.0 | 50.0 |
| Q(MLR) | 50.0 | 38.7 | 47.5 | 0.0 |
| Q(MLA) | 0.0 | 11.3 | 2.5 | 50.0 |
| q(NaCl) | 35'342 | 35'100 | 35'100 | 35'100 |
| q(Mg(OH)₂) | 6.8 | 7.5 | 6.9 | 10.6 |
| q(CaSO₄·2 H₂O) | 786.5 | 379.1 | 436.2 | 318.0 |
| q(CaCO₃) | 363.1 | 400.5 | 370.5 | 540.6 |

Die Vergleichsverfahren 1 und 2 haben einen deutlich höheren Bedarf an Natriumcarbonat und Rauchgas (RG) als das erfindungsgemässe Verfahren. Ausserdem wird ein signifikanter Anteil der Mutterlauge (ML) in Fliessgewässer abgestossen. Der vom erfindungsgemässen Verfahren verlangte Einsatz von Chlorwasserstoffsäure wird von diesen Ressourceneinsparungen und den geringeren Umweltbelastungen mehr als nur ausgeglichen. Im erfindungsgemässen Verfahren fällt zwar mehr Calciumsulfat Dihydrat an, was jedoch beispielsweise in der Gipsindustrie Verwendung finden kann.

Das Vergleichsverfahren 3 (Vergleich 3) in Tabelle 2 unterscheidet sich vom erfindungsgemässen Verfahren und den Vergleichsverfahren 1 und 2 insoweit, dass Überschuss an Calciumoxid eingesetzt wird. Auch hier wird mehr Natriumcarbonat und Rauchgas (RG) benötigt als im erfindungsgemässen Verfahren. Zudem wird die gesamte Mutterlauge (ML) abgestossen und kann nicht rückgeführt werden (Tabelle 2).

Vergleicht man die anfallenden Kosten für die chemischen Zusätze für die Aufbereitung der Natriumchlorid-Rohsole (RoS) der einzelnen Verfahren, zeigt sich, dass das erfindungsgemässe Verfahren deutlich kostengünstiger ist (Tabelle 3).

**Tabelle 3: Relative Kosten der angegebenen Chemikalien bezogen auf das Vergleichsverfahren 3 (100 %). Die Kosten für das CO₂ beziehen sich auf das verwendete Heizöl (extraleicht) zur Herstellung von Rauchgas (RG).**

| Hilfsstoff | Erfindung | Vergleich 1 | Vergleich 2 | Vergleich 3 |
|---|---|---|---|---|
| | Kosten % | Kosten % | Kosten % | Kosten % |
| CaO 85 % | 15.0 | 15.1 | 15.1 | 16.7 |
| CO₂ | 0.0 | 18.8 | 19.2 | 17.5 |
| Na₂CO₃ | 15.3 | 30.7 | 18.0 | 65.8 |
| HCl 31 % | 17.5 | 0.0 | 0.0 | 0.0 |
| Total | 47.9 | 64.6 | 52.3 | 100.0 |

## Patentansprüche

1. Verfahren zur Aufbereitung von Natriumchlorid-Rohsole (RoS), insbesondere zur Gewinnung von Siedesalz, durch Präzipitation von Magnesiumhydroxid, Calciumcarbonat und einem ersten Anteil Calciumsulfat durch Zugabe von Calciumoxid und/oder Calciumhydroxid in einer ersten Stufe (S1), sowie Präzipitation von Calciumcarbonat durch Zugabe von Natriumcarbonat und Rauchgas (RG) umfassend Kohlendioxid in einer zweiten Stufe (S2), **dadurch gekennzeichnet,**
- **dass** das präzipitierte Calciumcarbonat der zweiten Stufe (S2) durch Zugabe von Chlorwasserstoffsäure in einer Nebenstufe (N) zu Calciumchlorid und Kohlendioxid umgesetzt wird;
- **dass** das umgesetzte Calciumchlorid zur Präzipitation von einem zweiten Anteil Calciumsulfat in der ersten Stufe (S1) verwendet wird;
- **dass** das umgesetzte Kohlendioxid zur Ausfällung von Calciumcarbonat in der zweiten Stufe (S2) verwendet wird; und
- **dass** der Überstand der zweiten Stufe (S2) als aufbereitete Natriumchlorid-Reinsole (ReS) erhalten wird.

2. Verfahren nach Anspruch 1, **dadurch gekennzeichnet, dass** der Überstand der ersten Stufe (S1)
- eine Hydroxidkonzentration von mindestens 20 mmol/l, bevorzugt mindestens 25 mmol/l, am meisten bevorzugt mindestens 30 mmol/l aufweist; und/oder
- im Wesentlichen vollständig in der zweiten Stufe (S2) verwendet wird.

3. Verfahren nach einem der vorangehenden Ansprüche, **dadurch gekennzeichnet,**
a. **dass** der Gehalt an Magnesium-Ionen in der Natriumchlorid-Reinsole (ReS) weniger als 0.10 mg/kg ist, vorzugsweise weniger als 0.05 mg/kg ist, am meisten bevorzugt, dass die Natriumchlorid-Reinsole (ReS) im Wesentlichen frei von Magnesium-Ionen ist;
b. **dass** der Gehalt an Calcium-Ionen in der Natriumchlorid-Reinsole (ReS) weniger als 15.0 mg/kg ist, vorzugsweise weniger als 5.0 mg/kg ist, am meisten bevorzugt, dass die Natriumchlorid-Reinsole (ReS) im Wesentlichen frei von Calcium-Ionen ist;
c. **dass** der Gehalt an Sulfat-Ionen in der Natriumchlorid-Reinsole (ReS) weniger als 10.5 g/kg ist, vorzugsweise weniger als 8.5 g/kg ist, am meisten bevorzugt, dass die Natriumchlorid-Reinsole (ReS) im Wesentlichen frei von Sulfat-Ionen ist; oder
d. **dass** mehrere der Bedingungen a. bis c. erfüllt sind.

4. Verfahren nach einem der vorangehenden Ansprüche, **dadurch gekennzeichnet, dass** in einer dritten Stufe aus der Natriumchlorid-Reinsole (ReS) in einer Verdampfungskristallisation (VK) Natriumchlorid als Feststoff und eine Mutterlauge (ML) erzeugt werden.

5. Verfahren nach Anspruch 4, **dadurch gekennzeichnet,**
i. **dass** der Gehalt an Magnesium-Ionen in der Mutterlauge (ML) weniger als 0.10 mg/kg ist, vorzugsweise weniger als 0.05 mg/kg ist, am meisten bevorzugt, dass die Mutterlauge (ML) im Wesentlichen frei von Magnesium-Ionen ist;
ii. **dass** der Gehalt an Calcium-Ionen in der Mutterlauge (ML) weniger als 15 mg/kg ist, vorzugsweise weniger als 5 mg/kg ist, am meisten bevorzugt, dass die Mutterlauge (ML) im Wesentlichen frei von Calcium-Ionen ist;
iii. **dass** der Gehalt an Sulfat-Ionen in der Mutterlauge (ML) weniger als 35.0 g/kg ist, vorzugsweise weniger als 24.0 g/kg ist, am meisten bevorzugt, dass die Mutterlauge (ML) im Wesentlichen frei von Sulfat-Ionen ist; oder
iv. **dass** mehrere der Bedingungen i. bis iii. erfüllt sind.

6. Verfahren nach einem der Ansprüche 4 bis 5, **dadurch gekennzeichnet, dass** die Mutterlauge (ML) der Verdampfungskristallisation (VK) mindestens zu 80 %, vorzugsweise mindestens zu 90 %, noch mehr bevorzugt mindestens zu 95 %, am meisten bevorzugt im Wesentlichen vollständig in der ersten Stufe (S1) als Mutterlaugenrückführung (MLR) zugegeben wird.

7. Verfahren nach einem der vorangehenden Ansprüche, **dadurch gekennzeichnet, dass** pro Kilogramm in der Nebenstufe (N) zugegebener Chlorwasserstoffsäure höchstens 1.5 kg, bevorzugt höchstens 1.0 kg, am meisten bevorzugt höchstens 0.5 kg Natriumcarbonat in der zweiten Stufe (S2) zugegeben werden.

8. Verfahren nach einem der vorangehenden Ansprüche, **dadurch gekennzeichnet, dass** pro Kilogramm in der Nebenstufe (N) zugegebener Chlorwasserstoffsäure höchstens 1.0 kg, bevorzugt höchstens 0.5 kg, noch mehr bevorzugt höchstens 0.2 kg, am meisten bevorzugt gar kein Kohlendioxid als Bestandteil von Rauchgas in der zweiten Stufe (S2) zugegeben wird/werden.

9. Anlage zur Durchführung des Verfahrens nach einem der Ansprüche 1 bis 8, die Anlage umfassend
- ein erster Behälter (B) zur Durchführung der ersten Stufe (S1) des Verfahrens;
- ein zweiter Behälter (B) zur Durchführung der zweiten Stufe (S2) des Verfahrens;
- ein dritter Behälter (B) zur Durchführung der Nebenstufe (N) des Verfahrens;
- eine erste Verrohrung (VR) zur Überführung von Calciumchlorid aus dem dritten Behälter (B) in den ersten Behälter (B); und
- eine zweite Verrohrung (VR) zur Überführung von Kohlendioxid aus dem dritten Behälter (B) in den zweiten Behälter (B).

10. Anlage nach Anspruch 9, **dadurch gekennzeichnet, dass** durch die erste Verrohrung (VR) mindestens 18 kg, vorzugsweise mindestens 90 kg, noch mehr bevorzugt mindestens 180 kg, am meisten bevorzugt mindestens 230 kg Calciumchlorid pro Stunde überführt werden können.

11. Anlage nach einem der Ansprüche 9 bis 10, **dadurch gekennzeichnet, dass** durch die zweite Verrohrung (VR) mindestens 7 kg, vorzugsweise mindestens 35 kg, noch mehr bevorzugt mindestens 70 kg, am meisten bevorzugt mindestens 90 kg Kohlendioxid pro Stunde überführt werden können.

12. Anlage nach einem der Ansprüche 9 bis 11, wobei die Anlage über eine Steuervorrichtung verfügt, die so konfiguriert ist, dass in der zweiten Stufe (S2) bei bestimmungsgemässem Gebrauch nur so viel Rauchgas (RG) zugegeben wird, dass die Summe der zugegebenen Mengen an Kohlendioxid aus der Nebenstufe (N) und Kohlendioxid des Rauchgases (RG) dem Kohlendioxid-Bedarf der zweiten Stufe (S2) entspricht.

13. Anlage nach einem der Ansprüche 9 bis 12, wobei der erste Behälter (B), der zweite Behälter (B), der dritte Behälter (B) oder eine Kombination an Behältern (B) mit einer Rührvorrichtung (R) ausgestattet ist.

14. Anlage nach einem der Ansprüche 9 bis 13, wobei die erste Verrohrung (VR) und/oder die zweite Verrohrung (VR) mit einem Ventil (V) zur Regelung des Massendurchflusses (q) und/oder Volumendurchflusses (Q) ausgestattet ist/sind.

15. Anlage nach einem der Ansprüche 9 bis 14, wobei die erste Verrohrung (VR) und/oder die zweite Verrohrung (VR) mit einer Pumpe (P) zur Regelung des Massendurchflusses (q) und/oder Volumendurchflusses (Q) ausgestattet ist/sind.
